# EUROPÄISCHE PATENTANMELDUNG

(11) **EP 1 714 829 A2**
(43) Veröffentlichungstag der Anmeldung: **25.10.2006**
(21) Anmeldenummer: 06003539.1
(22) Anmeldetag: 22.02.2006
(51) Int. Cl.: B60P 1/38

(54) **Vorrichtung zum Be-und Entladen der Ladefläche eines Fahrzeugs, insbesondere Lastkraftwagens, mit Gütern**

(30) Priorität: 20.04.2005 DE 102005018266
(71) Anmelder: FAB GmbH Fördertechnik und Anlagenbau, 79761 Waldshut-Tiengen (DE)
(72) Erfinder: Müller, Anton, Dipl.-Ing. (FH), 79774 Albbruck-Birndorf (DE)
(74) Vertreter: Goy, Wolfgang

(57) **Zusammenfassung**

Eine Vorrichtung zum Be- und Entladen der Ladefläche 1 eines Fahrzeugs, insbesondere Lastkraftwagens, weist ein längs der Ladefläche 1 verfahrbares Transportband 2 auf, welches aus querverlaufenden Gliederelementen 3 aus Kunststoff besteht.

## Beschreibung

Die Erfindung betrifft eine Vorrichtung zum Be- und Entladen der Ladefläche eines Fahrzeugs, insbesondere Lastkraftwagens, mit Gütern nach dem Oberbegriff des Anspruchs 1.

Es sind automatisch arbeitende Vorrichtungen zum Be- und Entladen der Ladefläche eines Fahrzeugs, insbesondere Lastkraftwagens, mit Gütern bekannt. Das Grundprinzip einer bekannten Be- und Entladevorrichtung besteht in einem Transportband, welches sich auf der Ladefläche befindet bzw. die Ladefläche definiert und welches in Längsrichtung des Fahrzeugs auf der Ladefläche verfahrbar ist. Indem sich das Transportband in Fahrtrichtung des Fahrzeugs gesehen vorwärtsbewegt, werden von hinten aufgebrachte Güter sukzessive nach vorne in Richtung Fahrerhaus befördert. Das Entladen erfolgt analog in umgekehrter Weise, indem das Transportband entgegengesetzt angetrieben wird.

Die bekannten Be- und Entladevorrichtungen unter Verwendung eines Transportbandes besitzen diverse Nachteile. So haben die bekannten Vorrichtungen teilweise eine große Bauhöhe. Dadurch geht Laderaum verloren. Weiterhin müssen die Vorrichtungen individuell an das jeweilige Fahrzeug angepaßt werden. Dadurch ergeben sich lange Einbauzeiten. Weiterhin benötigen die bekannten Vorrichtungen teilweise mehrere Antriebe, was technisch aufwendig ist. Außerdem sind die bekannten Vorrichtungen teilweise relativ schwer. Da die bekannten Vorrichtungen teilweise auch aus relativ vielen Einzelteilen bestehen, ist die Zuverlässigkeit nicht optimal. Dadurch bedingt sind häufige Wartungen. Weiterhin müssen die Transportbänder teilweise komplett ausgewechselt werden, wenn eine Beschädigung aufgetreten ist. Schließlich sind die bekannten Be- und Entladevorrichtungen nicht immer mit Handhubwagen sowie leichten Staplern befahrbar.

Davon ausgehend liegt der Erfindung die **Aufgabe** zugrunde, eine Vorrichtung zum Be- und Entladen der Ladefläche eines Fahrzeugs, insbesondere Lastkraftwagens, mit Gütern der eingangs angegebenen Art mit einem verbesserten Transportbandsystem zu schaffen.

Die technische **Lösung** ist gekennzeichnet durch die Merkmale im Kennzeichen des Anspruchs 1.

Die Grundidee der erfindungsgemäßen Be- und Entladevorrichtung besteht in einem speziellen Transportband unter Verwendung von querverlaufenden Gliederelementen. Diese Gliederelemente zeichnen sich durch eine Vielzahl von Vorteilen aus. So lassen sich aus den Gliederelementen unterschiedlich lange Transportbänder auf technisch einfache Weise herstellen. Es ist lediglich erforderlich, die Gliederelemente entsprechend miteinander zu verbinden. Die einzelnen Gliederelemente des Gliederbandes sind bei Beschädigung leicht austauschbar, ohne daß das komplette Transportband ausgewechselt werden muß. Die Gliederelemente besitzen weiterhin eine derartige Breite, daß sie die gesamte Ladefläche des Fahrzeugs abdecken. Dabei ist es ohne weiteres möglich, mehrere Transportbänder nebeneinander anzuordnen, wie noch auszuführen sein wird.

In einer bevorzugten Weiterbildung bestehen die Gliederelemente gemäß Anspruch 2 aus Kunststoff. Dies hat den Vorteil, daß die Gliederelemente auf technisch einfache Weise in einem entsprechenden Spritzwerkzeug hergestellt werden können.

Eine weitere bevorzugte Weiterbildung schlägt Anspruch 3 dergestalt vor, daß es sich bei dem Transportband um ein Endlosband handelt, welches um endseitige Wellen läuft, wobei am einen Ende die Welle als Antriebswelle und am anderen Ende die Welle als Umlenkwelle ausgebildet sein kann.

Eine weitere bevorzugte Weiterbildung schlägt gemäß Anspruch 4 vor, daß das Transportband um die Länge der Ladefläche zurück und vor verfahrbar ist. Das Grundprinzip besteht somit darin, daß in der Ausgangsstellung des Transportbandes das Obertrum als Tragband und das Untertrum als Zugband dient. Zum Beladen des Transportbandes wird dieses einfach um die Länge der Ladefläche zurück verfahren, so daß quasi mit dem Beginn des Transportbandes die Güter aufgenommen und vollständig ins Innere des Fahrzeugs transportiert werden können.

Die Weiterbildung hiervon gemäß Anspruch 5 schlägt vor, daß das Tragband breiter ist als das Zugband. Der Vorteil in den unterschiedlichen Breiten besteht darin, daß das Transportband im Bereich mit der geringeren Breite an entsprechenden Spann- sowie Verlagerungsstationen vorbeilaufen kann, so daß dadurch die Möglichkeit gegeben ist, daß bei der Verwendung von mehreren, zueinander parallelen Transportbändern diese eng aneinanderliegen und eine durchgehende Ladefläche definieren.

Vorzugsweise ist gemäß Anspruch 6 der Antriebswelle und/oder der Umlenkwelle eine Spanneinrichtung zugeordnet. Dadurch ist gewährleistet, daß das Transportband eine optimale Spannung aufweist.

Die Weiterbildung gemäß Anspruch 7 schlägt vor, daß unterhalb des Obertrums des Transportbandes eine Gleitplatte angeordnet ist. Bei dieser Gleitplatte handelt es sich um eine vollflächige Gleitunterlage für das Transportband. Es kann sich dabei um eine Stahlunterkonstruktion mit einer Holzplatte handeln.

Eine weitere bevorzugte Weiterbildung schlägt gemäß Anspruch 8 vor, daß mehrere Transportbänder parallel zueinander sowie Seite an Seite angeordnet sind. Vorzugsweise sind drei Transportbänder vorgesehen, wobei die beiden äußeren Transportbänder spiegelbildlich sind. Die Transportbänder decken dabei die volle Breite des Förderers ab. Die Verwendung von drei Transportbändern hat den Vorteil, daß dadurch eine spezielle Anordnung eines kompakten Antriebs möglich ist.

Die Weiterbildung gemäß Anspruch 9 schlägt einen derartigen Antrieb vor, und zwar einen Antrieb mittels einer Antriebskette, indem auf den Antriebswellen der einzelnen Transportbänder Kettenräder angeordnet sind.

Die Weiterbildung des Antriebs schlägt gemäß Anspruch 10 eine gemeinsame Antriebswelle eines Antriebsmotors vor, auf welchem wiederum Kettenräder angeordnet sind, welche den Antrieb mit den Antriebswellen der Transportbänder über Antriebsketten herstellen.

Damit die Antriebskette die notwendige Spannung besitzt, ist der Antriebswelle des Antriebsmotors vorzugsweise eine Spanneinrichtung zugeordnet.

Ein Ausführungsbeispiel einer erfindungsgemäßen Vorrichtung zum Be- und Entladen der Ladefläche eines Fahrzeugs, insbesondere Lastkraftwagens, mit Gütern wird nachfolgend anhand der Zeichnungen beschrieben. In diesen zeigt:

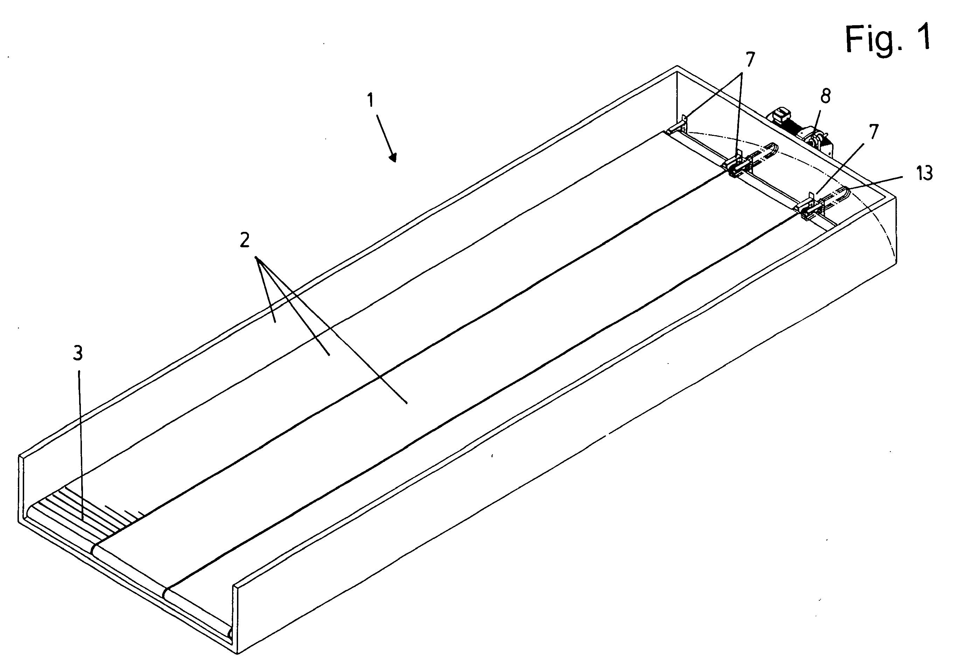

- Fig. 1: eine perspektivische Ansicht der Vorrichtung (wobei sich das - nicht dargestellte - Führerhaus des Fahrzeugs rechts befindet);
- Fig. 2: eine Draufsicht auf die Vorrichtung in Fig. 1;
- Fig. 3: einen Längsschnitt entlang der Linie A - A in Fig. 2;

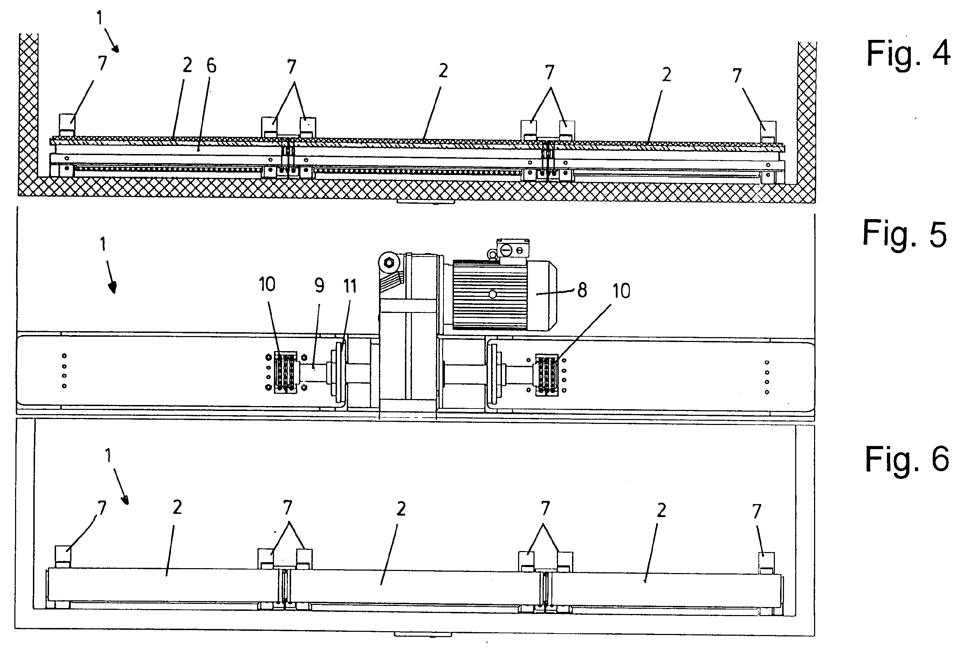

- Fig. 4: einen Querschnitt entlang der Linie C - C in Fig. 2;
- Fig. 5: eine Vorderansicht der Vorrichtung in Fig. 2;
- Fig. 6: eine Hinteransicht der Vorrichtung in Fig. 2;

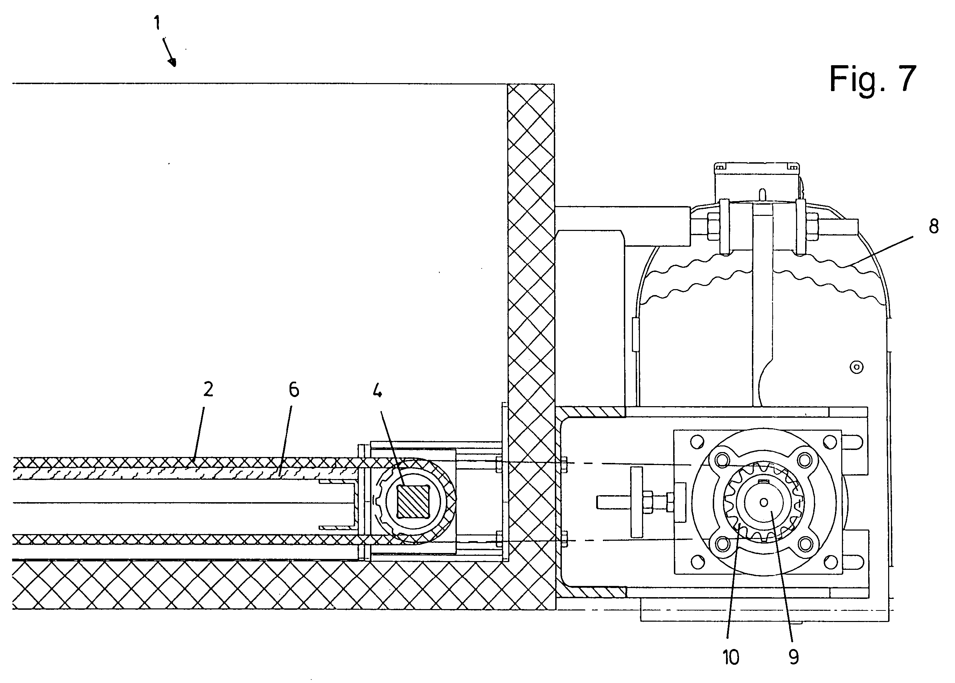

- Fig. 7: ein Detailausschnitt der Darstellung in Fig. 3 im Bereich des Antriebs;

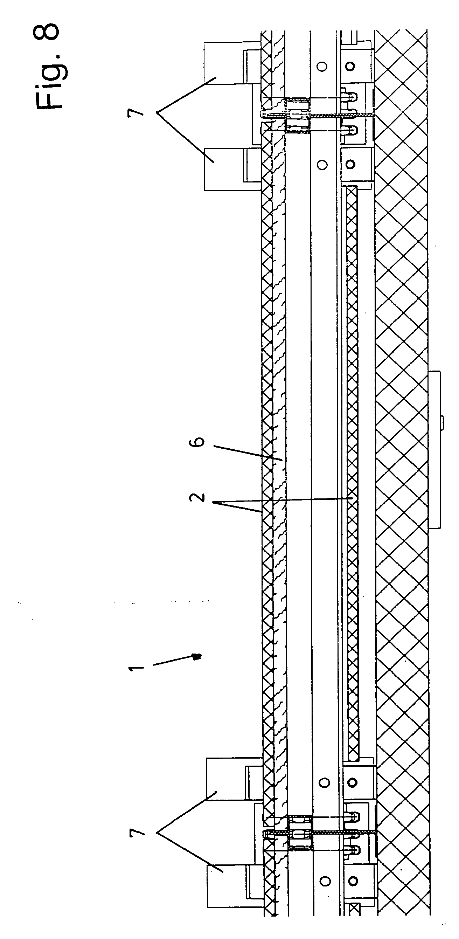

- Fig. 8: ein Detailausschnitt der Darstellung in Fig. 4 im Bereich des Antriebs;

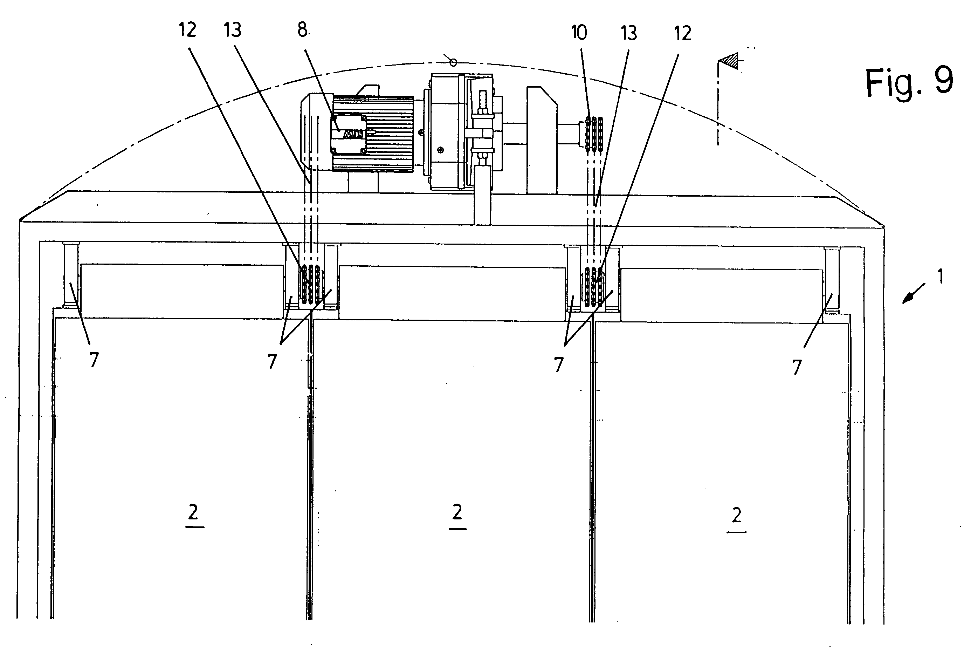

- Fig. 9: ein Detailausschnitt der Darstellung in Fig. 2 im Bereich des Antriebs.

Die Ladefläche 1 eines ansonsten nicht dargestellten Fahrzeugs, insbesondere Lastkraftwagens, weist eine Vorrichtung zum Be- und Entladen mit Gütern auf.

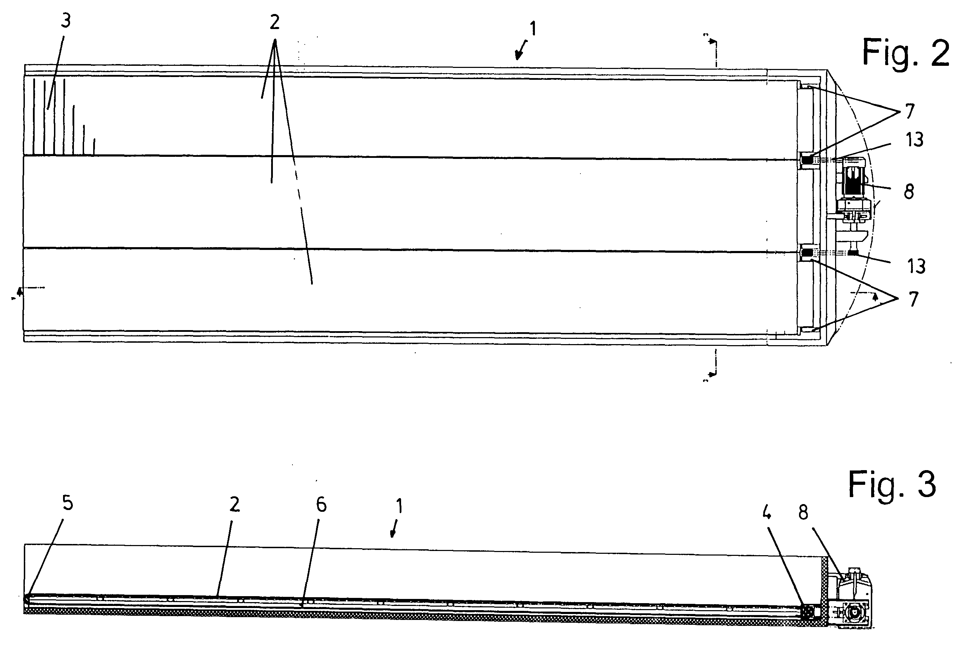

Die Be- und Entladevorrichtung weist insgesamt drei zueinander parallele sowie Seite an Seite liegende Transportbänder 2 auf. Dabei sind die beiden äußeren Transportbänder 2 spiegelbildlich zueinander ausgebildet. Die Transportbänder 2 bestehen aus einzelnen, bezüglich der Transportrichtung quer verlaufenden Gliederelementen 3 aus Kunststoff. Diese sind in Fig. 2 lediglich rein schematisch angedeutet.

Die Transportbänder 2 sind endseitig jeweils um eine Antriebsrolle 4 sowie um eine Umlenkrolle 5 geführt. Das endlose Transportband 2 ist dabei dergestalt ausgebildet, daß in der Grundstellung die Gliederelemente 3 des Obertrums breiter sind als die Gliederelemente 3 des Untertrums des Transportbandes 2. Das Obertrum des Transportbandes 2 dient dabei als Tragband, während das Untertrum des Transportbandes 2 als Zugband dient. Dabei lagert das Obertrum des Transportbandes 2 auf einer vollflächigen Gleitplatte 6. Es kann sich dabei um eine Holzplatte mit einer Stahlunterkonstruktion handeln.

Jeder der drei Antriebswellen 4 ist eine Spanneinrichtung 7 für das jeweilige Transportband 2 zugeordnet.

Zum Antrieb der Transportbänder 2 dient ein Antriebsmotor 8. Dieser befindet sich in der stirnseitigen Mitte der Ladefläche 1 im Bereich hinter dem Führerhaus. Dem Antriebsmotor 8 zugeordnet ist eine querverlaufende Antriebswelle 9. Die beiden Enden der Antriebswelle 9 weisen jeweils Kettenräder 10 in Driplex-Ausführung auf. Außerdem ist eine Spanneinrichtung 11 vorgesehen.

Korrespondierend zu den Kettenrädern 10 der Antriebswelle 9 des Antriebsmotors 8 weisen die Antriebswellen 4 der Transportbänder 2 im gegenüberliegenden Bereich zwischen zwei benachbarten Transportbändern 2 jeweils Kettenräder 12 auf. Dabei sind die Kettenräder 12 der Antriebswelle des mittleren Transportbandes 2 einfach ausgeführt, während die Kettenräder 12 der beiden äußeren Transportbänder 2 in Duplex-Auführung ausgeführt sind. Um die Kettenräder 10, 12 ist jeweils eine Antriebskette 13 in Driplex-Ausführung gelegt.

### Die Funktionsweise ist wie folgt:

Der Fahrzeug dockt über eine Andockstation rückwärts an einem stationären Förderer an, so daß die erfindungsgemäße Be- und Entladevorrichtung gewissermaßen die Fortsetzung dieses stationären Förderers bildet. Die stationäre Steuerung wird über einen manuell steckbaren Anschluß mit der Steuerung der erfindungsgemäßen Be- und Entladevorrichtung verbunden. Nach dem Startbefehl läuft die Be- bzw. Entladung automatisch ab.

Zum Beladen des Fahrzeugs werden die Transportbänder im leeren Zustand so weit nach hinten gefahren, bis der Anfang der breiten Gliederelemente 3 sich an der hintersten Kante der Ladefläche 1 befindet. Nun beginnt der Beladevorgang. Das Gut wird von dem stationären Förderer auf die erfindungsgemäße Be- und Entladevorrichtung der Ladefläche 1 übergeben. Die Transportbänder 2 fahren dabei so lange nach vorne, bis der Anfang der breiten Gliederbänder sich vorne im Bereich des Antriebs befindet.

Der Entladevorgang verläuft analog in umgekehrter Weise.

Die Vorteile der erfindungsgemäßen Be- und Entladevorrichtung liegen in einer relativ geringen Bauhöhe. Dadurch resultiert nur ein geringer Laderaumverlust. Die Vorrichtung ist weiterhin ohne Änderung in jedes Standard-Fahrzeug einbaubar. Dadurch ergeben sich kurze Einbauzeiten. Da nur ein Antrieb vorhanden ist, vereinfacht sich dessen konstruktiver Aufbau. Weiterhin zeichnet sich die erfindungsgemäße Be- und Entladevorrichtung im Vergleich zu herkömmlichen Systemen durch ein geringes Gewicht aus. Da nur wenige bewegte Teile vorhanden sind, resultiert hieraus weiterhin eine hohe Zuverlässigkeit. Das System ist insgesamt dadurch wartungsarm. Die einzelnen Gliederelemente 3 des Transportbandes 2 sind bei Beschädigung austauschbar, ohne daß das gesamte Transportband 2 ausgetauscht werden muß. Schließlich ist die Be- und Entladevorrichtung mit Hubwagen und leichten Staplern befahrbar.

### Bezugszeichenliste

- 1: Ladefläche
- 2: Transportband
- 3: Gliederelemente
- 4: Antriebswelle
- 5: Umlenkwelle
- 6: Gleitplatte
- 7: Spanneinrichtung
- 8: Antriebsmotor
- 9: Antriebswelle
- 10: Kettenräder
- 11: Spanneinrichtung
- 12: Kettenräder
- 13: Antriebskette

## Patentansprüche

1. Vorrichtung zum Be- und Entladen der Ladefläche (1) eines Fahrzeugs, insbesondere Lastkraftwagens, mit Gütern,
mit einem längs der Ladefläche (1) verfahrbaren Transportband (2),
**dadurch gekennzeichnet,**
**daß** das Transportband (2) aus querverlaufenden Gliederelementen (3) besteht.

2. Vorrichtung nach dem vorhergehenden Anspruch,
**dadurch gekennzeichnet,**
**daß** die Gliederelemente (3) aus Kunststoff bestehen.

3. Vorrichtung nach einem der vorhergehenden Ansprüche,
**dadurch gekennzeichnet,**
**daß** das Transportband (2) ein um eine endseitige Antriebswelle (4) sowie endseitige Umlenkwelle (5) laufendes Band ist.

4. Vorrichtung nach Anspruch 3,
**dadurch gekennzeichnet,**
**daß** das Transportband (2) um die Länge der Ladefläche (1) zurück und vor verfahrbar ist.

5. Vorrichtung nach Anspruch 4,
**dadurch gekennzeichnet,**
**daß** in derjenigen Position des Transportbandes (2), in der sich die Güter auf dem Transportband (2) befinden, das Obertrum des Transportbandes (2) breiter ist als das Untertrum des Transportbandes (2).

6. Vorrichtung nach einem der Ansprüche 3 bis 5,
**dadurch gekennzeichnet,**
**daß** der Antriebswelle (4) und/oder der Umlenkwelle (5) eine Spanneinrichtung (7) zugeordnet ist.

7. Vorrichtung nach einem der Ansprüche 3 bis 6,
**dadurch gekennzeichnet,**
**daß** unterhalb des Obertrums des Transportbandes (2) eine Gleitplatte (6) angeordnet ist.

8. Vorrichtung nach einem der vorhergehenden Ansprüche,
**dadurch gekennzeichnet,**
**daß** mehrere Transportbänder (2) parallel zueinander sowie Seite an Seite angeordnet sind und die Ladefläche (1) definieren.

9. Vorrichtung nach Anspruch 8,
**dadurch gekennzeichnet,**
**daß** den Transportbändern (2) jeweils eine Antriebswelle (4) zugeordnet ist und
**daß** im Bereich zwischen benachbarten Transportbändern (2) auf der jeweiligen Antriebswelle (4) jeweils wenigstens ein Kettenrad (12) für eine Antriebskette (13) eines Antriebsmotors (8) angeordnet ist.

10. Vorrichtung nach Anspruch 9,
**dadurch gekennzeichnet,**
**daß** dem vorzugsweise in der stirnseitigen Mitte angeordneten Antriebsmotor (8) eine Antriebswelle (9) zugeordnet ist, welche sich quer zur Transportrichtung der Transportbänder (2) erstreckt und auf welche Kettenräder (10) für die Antriebskette (13) angeordnet sind.

11. Vorrichtung nach Anspruch 10,
**dadurch gekennzeichnet,**
**daß** der Antriebswelle (9) eine Spanneinrichtung (11) zugeordnet ist.

12. Fahrzeug, insbesondere Lastkraftwagen, mit einer Vorrichtung zum Be- und Entladen der Ladefläche (1) nach einem der Ansprüche 1 bis 11.
